# EUROPEAN PATENT SPECIFICATION

(11) **EP 0 850 805 B1**
(45) Date of publication and mention of the grant of the patent: **16.10.2002**
(21) Application number: 97122487.8
(22) Date of filing: 19.12.1997
(51) Int. Cl.: B60R 9/055

(54) **A support structure of a system for transporting luggage and the like on the roof of a motor vehicle**
Trägerstruktur zum Gepäcktransport auf dem Dach eines Kraftfahrzeuges
Structure de support pour le transport de bagages sur le toit d'un véhicule automobile.

(30) Priority: 23.12.1996 IT TO961072
(43) Date of publication of application: 01.07.1998
(73) Proprietor: FIAT AUTO S.p.A., 10135 Torino (IT)
(72) Inventor: Collinucci, Luigi, 10137 Torino (IT); Morganti, Mario, 10124 Torino (IT)
(74) Representative: Quinterno, Giuseppe

(56) References cited:
- EP-A- 0 718 155
- WO-A-95/07196
- AU-B- 434 994
- CH-A- 292 962
- DE-A- 3 102 736
- FR-A- 2 695 890

## Description

The present invention relates to systems for the transport of luggage and the like on the roof of a motor vehicle, according the preamble of claim 1.

More specifically the invention relates to a support structure of the type comprising a plurality of transverse guides intended to be located on the roof of the motor vehicle so as to extend parallel to each other and transverse the longitudinal axis of the roof, the guides being adapted to couple slidingly with lateral seats of a plurality of case-like containers; and a central anchoring element intended to be fixed to the centre-line of the roof and to which the transverse guides can be fixed; the central anchoring element having a plurality of pairs of lateral retaining members on opposite sides for coupling and cooperating each with a respective releasable locking device of one of the containers fitted between two adjacent transverse guides to fix this container to the support structure.

A support structure of a system for transporting luggage of the type defined above is described in the published European Patent Application No. EP-A-O 718 155 in the name of the same applicant.

The object of the present invention is to provide a support structure which is improved with regard to its structural simplicity and the operations needed to put it into operation and also with regard to its versatility and practicality in use.

These and other objects are achieved according to the invention by a support structure having the main characteristics defined in the appended Claim 1.

Further characteristics and advantages of the invention will become apparent from the detailed description which follows, given purely by way of non-limitative example with reference to the appended drawings, in which;
Figure 1 is a perspective view of a support structure according to the invention of a system for transporting luggage and the like on the roof of a motor vehicle,
Figure 2 is a perspective view of the support structure according to the invention in a different assembled configuration of use,
Figure 3 shows the support structure of the invention in the configuration of use shown in Figure 2, installed on the roof of a motor vehicle, and
Figure 4 is a perspective view of a detail showing the coupling between the central anchoring element and a transverse guide of the support structure of the invention.

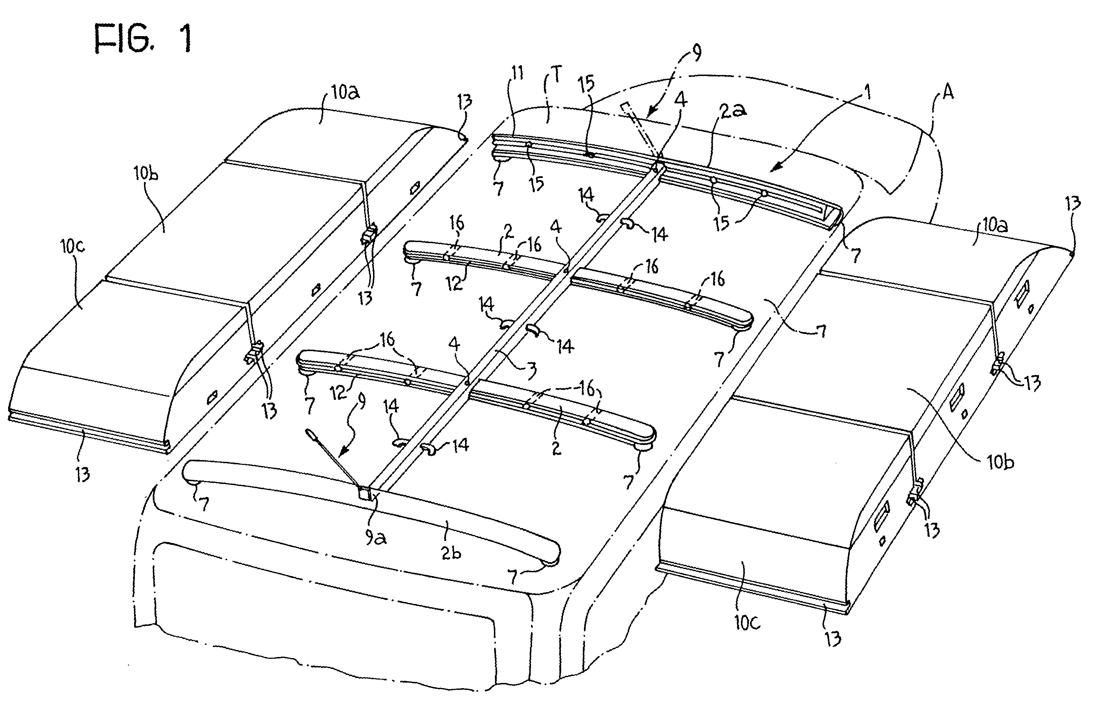

In Figure 1, a support structure of a system for transporting luggage and the like on the roof T of a motor vehicle A is generally indicated 1.

The support structure shown in Figure 1 comprises a plurality of transverse guides 2a, 2 and 2b and a central anchoring element 3.

The transverse guides 2a and 2b fixed to the ends of the central anchoring element 3 conveniently have tapered, aerodynamic, essentially wedge-shaped profiles as they are to be arranged on the end portions of the roof T of the motor vehicle A.

The transverse guides 2a, 2, 2b are firmly connected to the central anchoring element 3, for example by means of screws 4.

If the motor vehicle is of a type having a rear hatch, the extreme rear transverse guide 2b may be anchored to the vehicle by means of one or more C- or L-shaped brackets which fit over the rear edge of the roof.

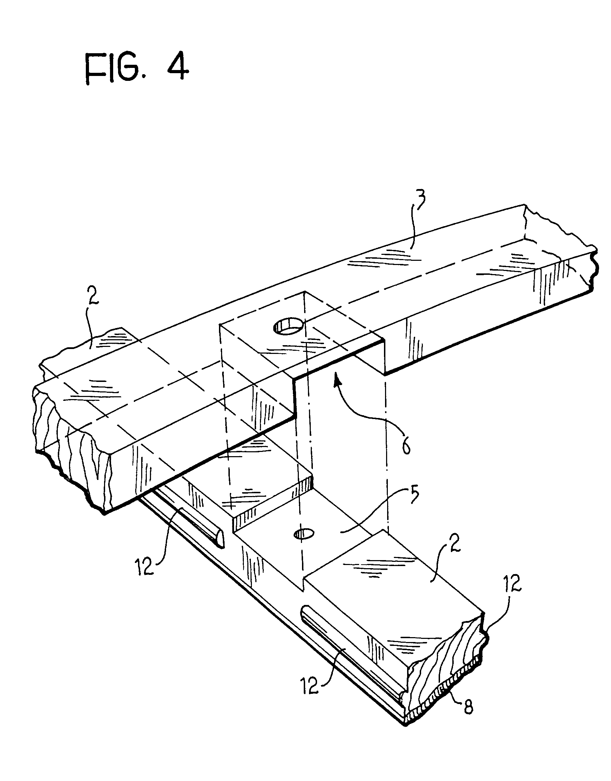

With regard to the intermediate transverse guides 2, as shown in Figure 4, these conveniently have respective central, recessed seats 5 which are a tight, mating fit with corresponding recessed seats 6 formed in the central anchoring element 3.

The support structure thus assembled can be arranged on the roof T of the motor vehicle, as shown in Figure 1, with the transverse guides 2a, 2, 2b extending transverse the longitudinal axis of the roof while the central anchoring element 3 extends along the middle of the roof.

In order to fix the support structure 1 to the roof T, the same screws or bolts 4 with which the extreme transverse guides 2a and 2b are attached to the central anchoring element 3 may be used. Conveniently, a tool, such as a dynamometric control or key of known type which enables screws or bolts to be tightened with a predetermined maximum force, may be used for this purpose and may, optionally, be provided on the support structure itself.

Conveniently the transverse guides 2 have stabilising members for retaining them in position on the roof T of the motor vehicle. These stabilising members may, for example, comprise suction cups 7, preferably arranged at the ends of the guides. The suction cups 7 may conveniently be of the adjustable-height type, particularly to allow the support structure 1 to be used on motor vehicles with different shaped roofs, in particular with different curvatures.

Alternatively, or in combination with the suction cups, permanent magnets (not illustrated) may be used as stabilising devices for the transverse guides.

As a further alternative, or in association with the stabilising devices described above, resilient support elements, for example of rubber or plastics material such as the rubber layer indicated 8 in Figure 4, may be provided, these being applied firmly to the surfaces of the transverse guides 2 intended to face the roof T of the motor vehicle.

Conveniently, but not necessarily, a seat may be provided at least at one end of the central anchoring element 3, and/or in the central part of at least one extreme transverse guide 2a or 2b, for receiving a base 9a of an aerial 9, as shown in Figure 1, for connection to equipment such as a radio or radio-telephone, etc, in the vehicle.

The support structure 1 described above can be used in the configuration shown in Figure 1 for anchoring a plurality of case-like containers 10a, 10b and 10c to the roof T.

For this purpose, the extreme transverse guides 2a and 2b each have respective projections 11 projecting towards the adjacent, intermediate transverse guide 2.

Again for this purpose, the transverse intermediate guides 2 have respective projections 12 on both sides (see in particular Figure 4).

The containers 10a to 10c each have respective parallel channels 13 on a pair of opposite sides for coupling with the projections 11 and 12 of the transverse guides 2a, 2, 2b to allow their sliding towards the central anchoring element 3.

This central anchoring element has a pair of lateral retaining members 14, essentially in the form of hooks, on opposite sides between each pair of adjacent transverse guides. Each of the containers 10a to 10c has a respective releasable locking device which can cooperate with a respective retaining member 14 of the central anchoring element 3 to attach the container to this anchoring element. The releasable locking device of each container has not been illustrated since, conveniently, it is of the type described in detail in the prior published European Patent Application mentioned above.

The bases of the containers 10a to 10c are preferably of the same length, corresponding to the longitudinal spacing of the transverse guides 2a, 2 and 2b. By virtue of this characteristic, the containers 10a may be positioned equally well between the front transverse guide 2a and the adjacent intermediate transverse guide 2 or between two intermediate transverse guides 2 or even between the last intermediate transverse guide 2 and the rear transverse guide 2b.

According to his needs, the user may thus use all of the containers or only some of them and, in this latter case, may fix the containers in the most convenient positions along the central anchoring element 3.

As seen in particular in Figure 1, a plurality of seats or holes 15 is formed in those faces of the extreme transverse guide 2a and 2b facing the intermediate transverse guides 2. Correspondingly, seats 16 are provided in each of the intermediate transverse guides 2 in axial alignment with these holes. In the embodiment illustrated in the drawings, the seats 16 are constituted by through-holes arranged with their axes parallel to the axis of the anchoring element 3.

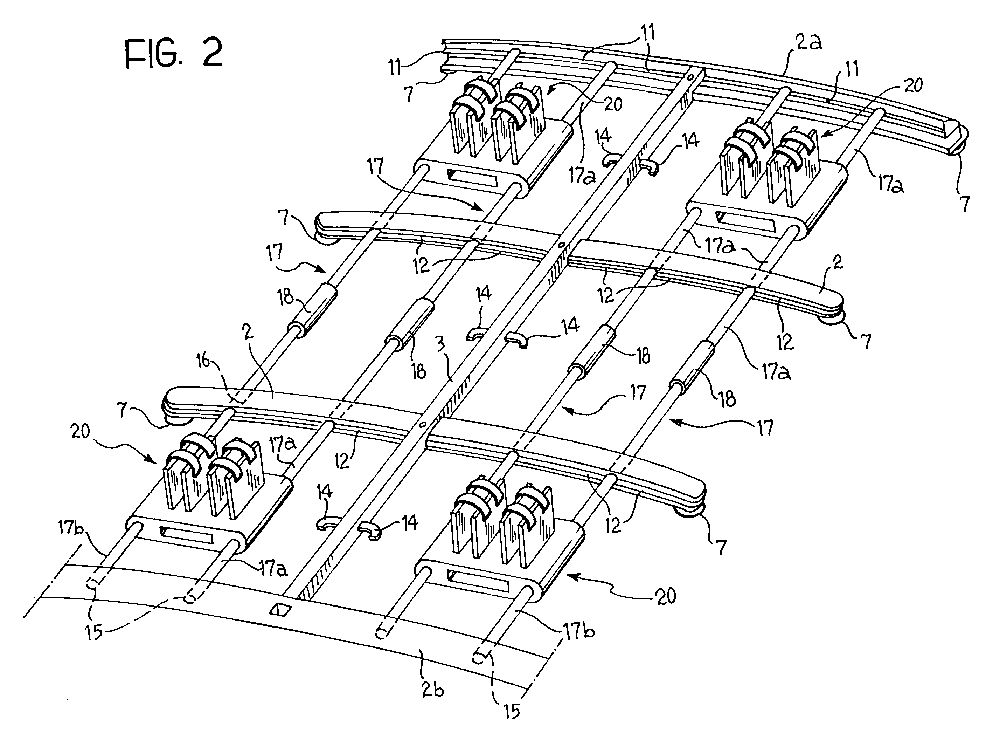

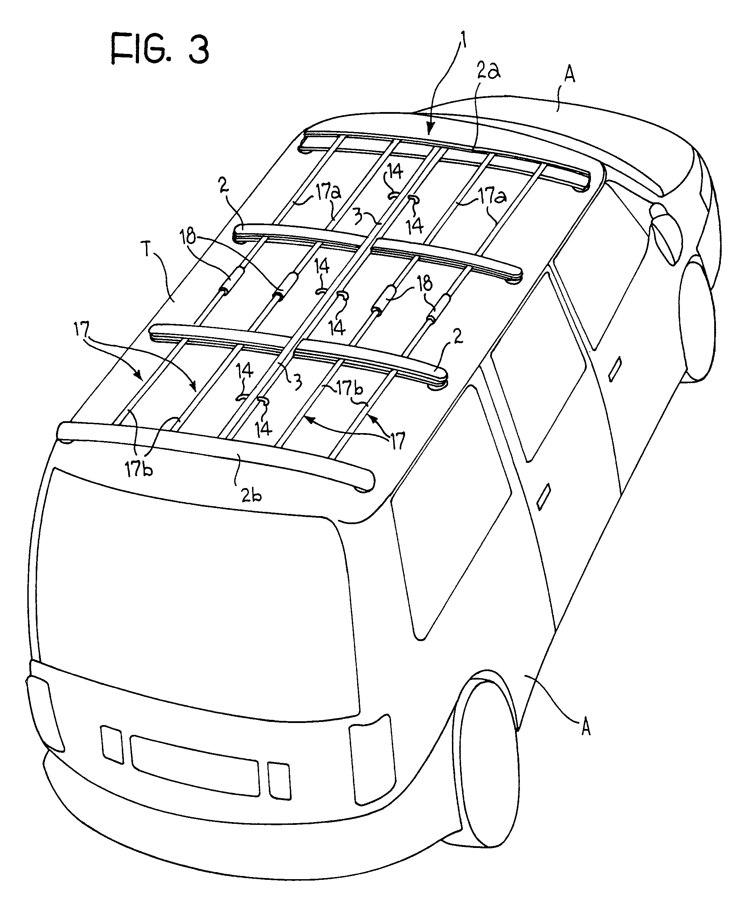

The support structure described above is conveniently equipped with a plurality of rod-like support elements, each of which is generally indicated 17 in Figures 2 and 3. The ends of these rod-like elements are engaged in respective holes 15 in the extreme transverse guides 2a and 2b. These elements also extend through the apertures or seats 16 in the intermediate transverse guides 2.

Conveniently, the rod-like support elements 17 are variable in length between a minimum, which is shorter than the distance between the extreme transverse guides 2a and 2b, and a maximum which is slightly longer than the distance between these guides.

In the embodiment illustrated, each support element 17 comprises two axially aligned portions or shafts 17a and 17b, the adjacent ends of which are threaded and coupled together by means of a threaded connecting sleeve 18.

When the support structure 1 is equipped with the rod-like support elements 17, it may be used as a conventional luggage rack, in the configuration shown in Figures 2 and 3, as well as being usable in the configuration shown in Figure 1 for achoring a plurality of containers to the roof. As will be appreciated, the longitudinal support elements 17 may be brought into use extremely easily by virtue of their variable lengths.

In addition to the solution described above, the lengths of the support elements 17 may be varied in other ways, such as, for example, with telescopic rods, preferably with resilient elements such as springs urging them towards their most extended conditions.

In the configuration shown in Figure 3, the support structure 1 enables loads of various forms or types to be fastened to the roof of the motor vehicle by belts, ropes and the like.

In particular, known retaining devices, such as the retaining devices indicated 20 in Figure 2, may be fitted onto the pairs of rod-like support elements 17 for transporting bicycles, skis, etc.

The support structure according to the invention is structurally very simple and can be assembled and fitted on to the roof of a motor vehicle very quickly and easily.

It is also extremely versatile as it can be used both with a plurality of case-like containers and as a conventional luggage rack.

Naturally, the principle of the invention remaining the same, the forms of embodiment and details of construction may be varied widely with respect of those described and illustrated purely by way of non-limitative example without thereby departing from the scope of the invention as defined in the appended claims.

## Claims

1. A support structure (1) for a system for transporting luggage and the like on the roof (T) of a motor vehicle (A), comprising
a plurality of transverse guides (2a, 2, 2b) intended to be located on the roof (T) so as to extend parallel to each other and transverse the longitudinal axis of the roof (T), the guides (2a, 2, 2b) being adapted to couple with lateral sliding seats (13) of a plurality of case-like containers (10a, 10b, 10c); and
a central anchoring element (3) intended to be fixed to the centre-line of the roof (T) and to which the transverse guides (2a, 2, 2b) can be fixed; the central anchoring element (3) having a plurality of pairs of lateral, retaining members (14) on opposite sides for coupling and cooperating each with a respective releasable locking device of one of the containers (10a, 10b, 10c) fitted between two adjacent transverse guides to fix this container (10a, 10b, 10c) to the support structure (1),
the structure (1) being **characterised in that** it further includes a plurality of rod-like longitudinal support elements (17) engageable in seats (15,16) in the transverse guides (2a, 2, 2b) whereby, in an assembled condition of use, the longitudinal support elements (17) extend parallel to the central anchoring element (3) in positions spaced from the surface of the roof (T) of the motor vehicle (A).

2. A structure according to Claim 1, **characterised in that** the transverse guides (2a, 2b) intended to be connected to the ends of the central anchoring element (3) have respective recesses or holes (15) in which the ends of the longitudinal support elements (17) are engageable, these elements having a length which is variable between a minimum and a maximum, respectively less than and greater than the distance between the extreme transverse guides (2a, 2b).

3. A structure according to Claim 2, **characterised in that** each longitudinal support element (17) includes two axially aligned portions or shafts (17a, 17b), the adjacent ends of which are threaded and coupled together by means of a threaded connecting member (18).

4. A structure according to Claim 3, **characterised in that** the adjacent ends of the two portions or shafts (17a, 17b) of each longitudinal support element (17) are externally threaded and the threaded connecting member is an internally threaded sleeve (18).

5. A structure according to any one of the preceding Claims, **characterised in that** the transverse guides (2a, 2, 2b) are flexible and have a curvature whereby they can be loaded resiliently against the roof (T) of the motor vehicle as a result of the fixing of the central anchoring element (3) to the roof (T).

6. A structure according to Claim 5, **characterised in that** the transverse guides (2a, 2, 2b) have stabilising means (7; 8) for retaining them in position on the roof (T) of the vehicle.

7. A structure according to Claim 6, **characterised in that** the stabilising means comprise permanent magnets.

8. A structure according to Claim 6 or Claim 7, **characterised in that** the stabilising means comprise suction cups (7).

9. A Structure according to Claim 8, **characterised in that** the suction cups (7) are adjustable in height.

10. A structure according to Claim 6, **characterised in that** the stabilising means comprise roof-contact elements (8) of resilient material applied to the faces of the transverse guides (2a, 2, 2b) intended to face the roof (T) of the motor vehicle.

11. A structure according to any one of the preceding Claims, **characterised in that** each transverse guide (2a, 2b) intended to be connected to an end of the central anchoring element (3) has an essentially wedge-shaped, tapered, aerodynamic transverse profile.

12. A structure according to any one of the preceding Claims, **characterised in that** a seat for coupling with an aerial (9) is provided at at least one end of the central anchoring element (3) and/or in the central part of at least one extreme transverse guide (2a, 2b).

13. A structure according to any one of the preceding Claims, **characterised in that** the transverse guides have respective central recessed seats (5) for tight mating connection with corresponding recessed seats (6) in the central anchoring element (3).

14. A structure according to any one of the preceding claims, **characterised in that** the central anchoring element (3) can be fixed to the roof (T) of the vehicle (A) by screws (4) or like threaded fixing members.

15. A structure according to Claim 14, **characterised in that** it further includes a control knob or key for enabling the screws or the like to be tightened with a predetermined maximum force.

16. A structure according to any one of the preceding claims, for a motor vehicle (A) having a rear aperture closed by a hatch, the structure (1) being **characterised in that** the extreme rear transverse guide (2b) can be fixed to the vehicle by means of one or more C- or L-shaped brackets which grip the rear edge of the roof (T) of the motor vehicle (A).

17. A structure according to any one of the preceding claims, **characterised in that** it further includes a plurality of retaining devices (20) to which the objects to be transported can be fixed; the retaining devices (20) each having a pair of parallel through-holes for the passage of two of the longitudinal support elements (17).

## Patentansprüche

1. Trägerstruktur (1) für ein System zum Transportieren von Gepäck und dergleichen am Dach (T) eines Kraftfahrzeugs (A), umfassend
eine Mehrzahl von Querführungen (2a, 2, 2b), die dazu bestimmt sind, am Dach (T) angeordnet zu sein, um sich zueinander parallel und quer zur Längsachse des Dachs (T) zu erstrecken, wobei die Führungen (2a, 2, 2b) zur Verkoppelung mit den seitlichen Gleitsitzen (13) einer Mehrzahl von gehäuseartigen Behältern (10a, 10b, 10c) angepasst sind; und
ein zentrales Verankerungselement (3), das dazu bestimmt ist, an der Mittellinie des Dachs (T) befestigt zu sein, und an dem die Querführungen (2a, 2, 2b) befestigt werden können; wobei das zentrale Verankerungselement (3) eine Mehrzahl von Paaren seitlicher Halteglieder (14) auf gegenüberliegenden Seiten hat, und zwar zum Verkoppeln und
Zusammenwirken jedes einzelnen mit einer jeweiligen lösbaren Verschlussvorrichtung eines der Behälter (10a, 10b, 10c), die zwischen zwei benachbarten Querführungen befestigt sind, um diesen Behälter (10a, 10b, 10c) an der Trägerstruktur (1) zu befestigen, wobei die Struktur (1) **dadurch gekennzeichnet ist, dass** sie weiters eine Mehrzahl von stangenartigen längsgerichteten Trägerelementen (17) einschließt, die mit Befestigungsstellen (15, 16) in den Querführungen (2a, 2, 2b) in Eingriff zu bringen sind, wobei sich die längsgerichteten Trägerelemente (17) in einem zusammengebauten Verwendungszustand parallel zum zentralen Verankerungselement (3) erstrecken, und zwar in Stellungen, die sich in einem Abstand zur Oberfläche des Dachs (T) des Kraftfahrzeugs (A) befinden.

2. Struktur gemäß Anspruch 1, **dadurch gekennzeichnet, dass** die Querführungen (2a, 2b), die dazu bestimmt sind, mit den Enden des zentralen Verankerungselements (3) verbunden zu werden, entsprechende Vertiefungen oder Löcher (15) haben, mit welchen die Enden der längsgerichteten Trägerelemente (17) in Eingriff zu bringen sind, wobei diese Elemente eine Länge haben, die zwischen einem Minimum und einem Maximum variabel bzw. kleiner und größer als der Abstand zwischen den äußersten Querführungen (2a, 2b) ist.

3. Struktur gemäß Anspruch 2, **dadurch gekennzeichnet, dass** jedes längsgerichtete Trägerelement (17) zwei axial ausgerichtete Teile oder Stiele (17a, 17b) einschließt, deren benachbarte Enden mittels eines Verbindungsglieds mit Gewinde (18) ineinander gewunden und miteinander verbunden sind.

4. Struktur gemäß Anspruch 3, **dadurch gekennzeichnet, dass** die benachbarten Enden der beiden Teile oder Stiele (17a, 17b) jedes längsgerichteten Trägerelements (17) außen mit Gewinde versehen sind und das Verbindungsglied mit Gewinde eine innen mit Gewinde versehene Hülse (18) ist.

5. Struktur gemäß einem der vorhergehenden Ansprüche, **dadurch gekennzeichnet, dass** die Querführungen (2a, 2, 2b) biegsam sind und eine Krümmung haben, wodurch sie als Ergebnis der Befestigung des zentralen Verankerungselements (3) am Dach (T) elastisch gegen das Dach (T) des Kraftfahrzeugs beladen werden können.

6. Struktur gemäß Anspruch 5, **dadurch gekennzeichnet, dass** die Querführungen (2a, 2, 2b) Stabilisierungsmittel (7; 8) haben, um am Dach (T) des Fahrzeugs in Position gehalten zu werden.

7. Struktur gemäß Anspruch 6, **dadurch gekennzeichnet, dass** die Stabilisierungsmittel Dauermagnete umfassen.

8. Struktur gemäß Anspruch 6 oder Anspruch 7, **dadurch gekennzeichnet, dass** die Stabilisierungsmittel Saugnäpfe (7) umfassen.

9. Struktur gemäß Anspruch 8, **dadurch gekennzeichnet, dass** die Saugnäpfe (7) höhenverstellbar sind.

10. Struktur gemäß Anspruch 6, **dadurch gekennzeichnet, dass** die Stabilisierungsmittel Dachkontaktelemente (8) aus elastischem Material umfassen, die an den Seiten der Querführungen (2a, 2, 2b) angebracht sind, welche dazu bestimmt sind, zum Dach (T) des Kraftfahrzeugs gerichtet zu sein.

11. Struktur gemäß einem der vorhergehenden Ansprüche, **dadurch gekennzeichnet, dass** jede zur Verbindung mit einem Ende des zentralen Verankerungslements (3) bestimmte Querführung (2a, 2b) ein im wesentlichen keilförmiges, spitz zulaufendes, aerodynamisches Stirnprofil hat.

12. Struktur gemäß einem der vorhergehenden Ansprüche, **dadurch gekennzeichnet, dass** an zumindest einem Ende des zentralen Verankerungselements (3) und/oder im Mittelteil von zumindest einer äußersten Querführung (2a, 2b) eine Befestigungssstelle zur Ankoppelung einer Antenne (9) vorgesehen ist.

13. Struktur gemäß einem der vorhergehenden Ansprüche, **dadurch gekennzeichnet, dass** die Querführungen entsprechende zentrale vertiefte Befestigungsstellen (5) zur genau zusammenpassenden Verbindung mit entsprechenden vertieften Befestigungsstellen (6) im zentralen Verankerungselement (3) haben.

14. Struktur gemäß einem der vorhergehenden Ansprüche, **dadurch gekennzeichnet, dass** das zentrale Verankerungselement (3) durch Schrauben (4) oder ähnliche Befestigungsteile mit Gewinde am Dach (T) des Fahrzeugs (A) befestigt werden kann.

15. Struktur gemäß Anspruch 14, **dadurch gekennzeichnet, dass** sie weiters einen Steuergriff oder -schlüssel einschließt, um ein Anziehen der Schrauben oder dergleichen mit einer vorbestimmten Maximalkraft zu ermöglichen.

16. Struktur gemäß einem der vorhergehenden Ansprüche für ein Kraftfahrzeug (A) mit einer mittels Ladetür verschlossenen hinteren Öffnung, wobei die Struktur (1) **dadurch gekennzeichnet ist, dass** die äußerste hintere Querführung (2b) mittels einer oder mehrerer C-oder L-förmiger Klammern, welche die hintere Kante des Dachs (T) des Kraftfahrzeugs (A) umfassen, am Fahrzeug befestigt werden kann.

17. Struktur gemäß einem der vorhergehenden Ansprüche, **dadurch gekennzeichnet, dass** sie weiters eine Mehrzahl von Haltevorrichtungen (20) umfasst, an denen die zu transportierenden Gegenstände befestigt werden können; wobei jede Haltevorrichtung (20) ein Paar paralleler Durchgangslöcher für das Durchgehen zweier der längsgerichteten Trägerelemente (17) besitzt.

## Revendications

1. Structure de support (1) pour un système destiné au transport de bagages et analogues sur le toit (T) d'un véhicule à moteur (A), comprenant :
une pluralité de guides transversaux (2a, 2, 2b) destinés à être placés sur le toit (T) de manière à s'étendre parallèlement les uns aux autres et transversalement à l'axe longitudinal du toit (T), les guides (2a, 2, 2b) étant adaptés être accouplés à des sièges de coulissement latéraux (13) d'une pluralité de conteneurs (10a, 10b, 10c) analogues à des boîtes ; et
un élément d'ancrage central (3) destiné à être fixé sur la ligne centrale du toit (T) et sur lequel peuvent être fixés les guides transversaux (2a, 2, 2b), ledit élément d'ancrage central (3) ayant une pluralité de paires d'éléments de retenue latéraux (14) sur des côtés opposés afin de s'accoupler et de coopérer chacun avec un dispositif de blocage libérable respectif de l'un des conteneurs (10a, 10b, 10c) monté entre deux guides transversaux adjacents pour fixer ce conteneur (10a, 10b, 10c) sur la structure de support (1), la structure (1) étant **caractérisée en ce qu'**elle inclut en outre une pluralité d'éléments de support longitudinaux (17) analogues à des barres, susceptibles d'être engagés dans des sièges (15, 16) dans les guides transversaux (2a, 2, 2b) grâce à quoi, dans une condition d'utilisation assemblée, les éléments de support longitudinaux (17) s'étendent parallèlement à l'élément d'ancrage central (3) dans des positions espacées depuis la surface du toit (T) du véhicule à moteur (A).

2. Structure selon la revendication 1, **caractérisée en ce que** des guides transversaux (2a, 2b) destinés à être connectés aux extrémités de l'élément d'ancrage central (3) ont des évidements ou des trous respectifs (15) dans lesquels peuvent être engagées les extrémités des éléments de support longitudinaux (17), ces éléments ayant une longueur variable entre un minimum et un maximum, respectivement inférieur et supérieur à la distance entre les guides transversaux extrêmes (2a, 2b).

3. Structure selon la revendication 2, **caractérisée en ce que** chaque élément de support longitudinal (17) inclut deux tronçons ou arbres axialement alignés (17a, 17b), les extrémités adjacentes de ces derniers étant vissées et accouplées ensemble au moyen d'un élément de connexion à vis (18).

4. Structure selon la revendication 3, caractérisée en en ce que les extrémités adjacentes des deux tronçons ou arbres (17a, 17b) de chaque élément de support longitudinal (17) sont filetés à l'extérieur, et en ce que l'élément de connexion à vis est un manchon à taraudage interne (18).

5. Structure selon l'une quelconque des revendications précédentes, **caractérisée en ce que** les guides transversaux (2a, 2, 2b) sont flexibles et présentent une courbure grâce à laquelle ils peuvent être chargés élastiquement contre le toit (T) du véhicule à moteur en résultat de la fixation de l'élément d'ancrage central (3) sur le toit (T).

6. Structure selon la revendication 5, **caractérisée en ce que** les guides transversaux (2a, 2, 2b) comprennent des moyens de stabilisation (7 ; 8) pour les retenir en position sur le toit (T) du véhicule.

7. Structure selon la revendication 6, **caractérisée en ce que** les moyens de stabilisation comprennent des aimants permanents.

8. Structure selon l'une ou l'autre des revendications 6 et 7, **caractérisée en ce que** les moyens de stabilisation comprennent des coupelles à succion (7).

9. Structure selon la revendication 8, **caractérisée en ce que** les coupelles à succion (7) sont ajustables en hauteur.

10. Structure selon la revendication 6, **caractérisée en ce que** les moyens de stabilisation comprennent des éléments de contact de toiture (8) en matériau élastique, appliqués sur les faces des guides transversaux (2a, 2, 2b) destinés à être tournés vers le toit (T) du véhicule à moteur.

11. Structure selon l'une quelconque des revendications précédentes, **caractérisée en ce que** chaque guide transversal (2a, 2b) destiné à être connecté à une extrémité de l'élément d'ancrage central (3) a un profil transversal aérodynamique effilé essentiellement en forme de coin.

12. Structure selon l'une quelconque des revendications précédentes, **caractérisée en ce qu'**il est prévu une assise pour l'accouplement d'une antenne (9), au moins à une extrémité de l'élément d'ancrage (3) et/ou dans la partie centrale d'au moins guide transversal extrême (2a, 2b).

13. Structure selon l'une quelconque des revendications précédentes, **caractérisée en ce que** les guides transversaux possèdent des assises respectives centrales en évidement (5) pour une connexion appariée intime avec des assises en évidement correspondantes (6) dans l'élément d'ancrage central (3).

14. Structure selon l'une quelconque des revendications précédentes, **caractérisée en ce que** l'élément d'ancrage central (3) peut être fixé sur le toit (T) du véhicule (A) par des vis (4) ou par des éléments de fixation à vissage analogues.

15. Structure selon la revendication 14, **caractérisée en ce qu'**elle inclut en outre un bouton ou une clef central(e) pour permettre de serrer les vis ou analogues avec une force maximum prédéterminée.

16. Structure selon l'une quelconque des revendications précédentes, pour un véhicule à moteur (A) ayant une ouverture arrière fermée par un hayon, la structure (1) étant **caractérisée en ce que** le guide transversal postérieur extrême (2b) peut être fixé au véhicule au moyen d'une ou plusieurs platines en forme de C ou en forme de L qui saisissent la bordure arrière du toit (T) du véhicule à moteur (A).

17. Structure selon l'une quelconque des revendications précédentes, **caractérisée en ce qu'**elle inclut en outre une pluralité de dispositifs de retenue (20) sur lesquels les objets à transporter peuvent être fixés ; lesdits dispositifs de retenue (20) ayant chacun une paire de trous traversants parallèles pour le passage de deux des éléments de support longitudinaux (17).
